# EUROPÄISCHE PATENTSCHRIFT

(11) **EP 1 615 789 B1**
(45) Veröffentlichungstag und Bekanntmachung des Hinweises auf die Patenterteilung: **27.09.2006**
(21) Anmeldenummer: 04726453.6
(22) Anmeldetag: 08.04.2004
(51) Int. Cl.: B60H 1/00

(54) **KRAFTFAHRZEUG MIT EINER KLIMAANLAGE**
MOTOR VEHICLE COMPRISING AN AIR CONDITIONING SYSTEM
VEHICULE AUTOMOBILE EQUIPE D'UNE CLIMATISATION

(30) Priorität: 15.04.2003 DE 10317184
(43) Veröffentlichungstag der Anmeldung: 18.01.2006
(73) Patentinhaber: AUDI AG, 85045 Ingolstadt (DE); Obrist Engineering GmbH, 6890 Lustenau (AT)
(72) Erfinder: HAMMER, Hans, 85276 Pfaffenhofen (DE); SCHROEDER, Dirk, 85107 Baar-Ebenhausen (DE); REBINGER, Christian, 85049 Ingolstadt (DE); OBRIST, Frank, 6900 Bregenz (AT); WOLF, Frank, 6973 Höchst (AT); GRAZ, Martin, A-6890 Lustenau (AT)
(74) Vertreter: Geissler, Manfred
(86) Internationale Anmeldenummer: PCT/EP2004/003790
(87) Internationale Veröffentlichungsnummer: WO 2004/091949

(56) Entgegenhaltungen:
- US-A- 4 204 707
- US-A- 4 408 467
- US-A- 5 367 883
- US-A- 5 521 340

## Beschreibung

Die Erfindung betrifft ein Kraftfahrzeug mit einer Klimaanlage, deren Kanalsystem einen am Triebwerk des Fahrzeuges befestigten Kompressor mit mindestens einem an der Fahrzeugkarosserie befestigten Wärmetauscher verbindet, wobei das im Triebwerksraum des Fahrzeuges verlaufende Kanalsystem mindestens eine durch die Einbaugeometrie im Fahrzeugraum bedingte Rohrkrümmung aufweist, zumindest ein Teil der Rohrstränge des Kanalsystems aus metallischem Werkstoff besteht und zur Vermeidung der Übertragung von Schwingungen vom Kompressor auf die Fahrzeugkarosserie Mittel zur Schwingungsdämpfung vorgesehen sind.

Das Triebwerk eines Kraftfahrzeuges und der an ihm befestigte Kompressor einer Klimaanlage erzeugen bekanntlich mechanische Schwingungen und Druckpulsationen im strömenden Wärmeträger, deren Übertragung auf die Karosserie bzw. auf die Fahrgastzelle durch Dämpfungsmittel zu verhindern ist. Das Triebwerk des Fahrzeuges ist hierzu auf gummielastischen Dämpfungskörpern gelagert. Außerdem sind z.B. entsprechend der US 5,367,883 in die vom Kompressor zu einem Wärmetauscher führenden Rohrstränge des Kanalsystems der Klimaanlage armierte Gummischlauchstücke eingefügt, die dank ihrer Pulsationsdämpfung durch Radial- und Längsdehnung eine Schwingungsübertragung vom Triebwerk und vom Kompressor auf die einerseits im Frontbereich und andererseits im Klimakasten des Fahrzeuges an der Karosserie befestigten Wärmetauscher und damit auch auf die Karosserie verhindern. Außerdem erleichtern die Gummischlauchstücke durch ihre Biegsamkeit die Montage oder Demontage des Triebwerkes sowie die Verlegung der Rohre des Kanalsystems im Triebwerksraum des Fahrzeuges.

Durch die erheblichen, im Kanalsystem auftretenden Drücke ist die armierte Herstellung und dichte Einfügung von Gummischlauchstücken in die sonst metallischen Rohrleitungsstränge des Kanalsystems über jeweils eine endseitige Hochdruckrohrverbindung jedoch sehr aufwändig und entsprechend teuer. Weiterhin beanspruchen die Gummischlauchstücke durch ihren größeren Durchmesser zusätzlichen Raum innerhalb des Triebwerkraumes des Fahrzeuges, so dass ihre Verlegung erschwert ist. Diese Gummischläuche führen außerdem zu einem Verlust an Betriebsmittel, da sie nicht vollständig diffusionsdicht ausführbar sind. Auch können sie nicht verhindern, dass Feuchtigkeit in das Kanalsystem eindiffundiert, so dass die Schmiereigenschaften des im Betriebsmittel enthaltenen Schmieröls beeinträchtigt werden. Diese Nachteile sind auch in der US 5,182,922 beschrieben. Die ersatzweise Verwendung von flexiblen Rohrverbindern kann jedoch aufgrund der dabei verwendeten, Scherkräften ausgesetzten, elastischen Dicht- und Gelenkmittel diesen Nachteil nicht vollständig beheben und eignet sich außerdem nicht im Hochdruckbereich bzw. für Klimaanlagen mit CO₂ als Betriebsmittel.

Der Erfindung liegt die Aufgabe zugrunde, die genannten Nachteile zu vermeiden und entsprechend ein Fahrzeug mit einer Klimaanlage zu finden, die bei geringen Herstellungskosten und geringerem Raumbedarf die Übertragung von Schwingungen auf Wärmetauscher der Klimaanlage und damit auf die Fahrzeugkarosserie verhindert.

Die Lösung der genannten Aufgabe erfolgt erfindungsgemäß dadurch, dass zumindest ein Rohrstrang, der einerseits an dem Kompressor und anderseits an einem an der Fahrzeugkarosserie befestigten Wärmetauscher des Kanalsystems angeschlossen ist, ganzheitlich aus metallischem Werkstoff besteht und einen Außendurchmesser von weniger als 13 mm aufweist.

Es wurde somit gefunden, dass trotz der sehr kostengünstigen, ganzheitlichen Verwendung eines relativ starren metallischen Werkstoffes für mindestens einen der Rohrstränge des Kanalsystems und seine Auslegung für die in Klimaanlagen üblichen hohen Drücke, insbesondere für Kohlendioxid, eine ausreichende Nachgiebigkeit der Rohrstränge erzielbar ist, um die Übertragung von Vibrationen auf einen angeschlossene Wärmetauscher und damit auf die Fahrzeugkarosserie ausreichend zu dämpfen. Für die Montage des Rohrstranges ergibt sich durch seinen ganzheitlich verhältnismäßig geringen Durchmesser einerseits ein geringerer Platzbedarf im Triebwerksraum und andererseits eine Biegsamkeit, die seine Verlegung im Triebwerksraum vereinfacht.

Es versteht sich, dass die genannten Vorteile umso deutlicher werden, je kleiner der erfindungsgemäß geringe Rohrdurchmesser ist. Entsprechend einer bevorzugten Ausführungsform der Erfindung kann in dem Bereich des Kanalsystems der Klimaanlage, in dem funktionsgemäß eine Drosselung der Strömung ihres Betriebsmittels vorzusehen ist, ein besonders dünner Rohrstrang mit einem kapillarrohrartigen Innendurchmesser von z.B. weniger als 2 mm und einer der Einbaugeometrie angepassten Länge von z.B. 900 mm vorgesehen sein, so dass sich neben der Einsparung eines Drosselventils eine besonders hohe Dämpfung von Vibrationen ergibt sowie der Vorteil seiner besonders einfachen Verlegung im Triebwerksraum des Fahrzeuges. Diese Ausführung ist auch besonders vorteilhaft bei der Anwendung der Erfindung an einer Klimaanlage, die zur Beheizung des Fahrzeuges auf einen sogenannten Dreiecksprozess umschaltbar ist, bei dem ebenfalls ein Rohrstrang direkt vom Kompressor zu einem der Fahrzeugbeheizung dienenden Wärmetauscher führt.

Wenn der Durchmesser eines z.B. saugseitigen ganzmetallischen Rohrstranges im oberen, erfindungsgemäßen Bereich gewählt wird, kann seine Ausbiegbarkeit gegenüber bekannten, gummielastischen Schlauchstücken, trotz ausreichender Dämpfungseigenschaften, geringer sein, so dass er durch gewaltsames Wegbiegen von Hand, z.B. zur Freigabe eines Montageraumes beim Aus- oder Einbau des Triebwerkes des Fahrzeuges, beschädigt werden könnte. In diesem Fall kann an gut zugänglicher Stelle im Triebwerksraum, in Abstand von den notwendigen Anschlusskupplungen am Wärmetauscher und Kompressor eine zusätzliche, gegenüber einem Schlauchstück wesentlich kostengünstigere Rohrkupplung angeordnet werden.

Die ganzheitliche Ausführung der Rohre des Kanalsystems aus Metall und vorzugsweise einer Aluminiumlegierung führt zwar zu einer geringeren Dämpfung von Druckpulsationen im Betriebsmittelstrom der Klimaanlage, jedoch können diese durch eine im Kanalsystem auf begrenzter Länge vorgesehene Querschnittserweiterung, z.B. in Form eines an sich bekannten, in einem Rohrstrang eingelöteten Mufflers verhindert werden. Ein solcher lässt sich durch Tiefziehen kostengünstig z.B. aus derselben Aluminiumlegierung herstellen, wie sie vorzugsweise für die Rohrstränge des Kanalsystems verwendet wird.

Weitere Ausführungsformen der Erfindung sind der folgenden Beschreibung an Hand der Zeichnungen zu entnehmen. Es zeigt:
Fig.1 eine stark vereinfachte, schematische Darstellung des Kanalsystems einer Klimaanlage mit Anordnung im Triebwerksraum eines Fahrzeuges,
Fig.2 eine perspektivische Darstellung von zwei Rohrsträngen des Kanalsystems einer Klimaanlage entsprechend dem Stand der Technik,
Fig.3 eine perspektivische Darstellung von zwei Rohrsträngen des Kanalsystems einer Klimaanlage entsprechend der Erfindung und
Fig.4 eine perspektivische, vergleichende Darstellung je eines Rohrstranges entsprechend dem Stand der Technik und entsprechend der Erfindung.

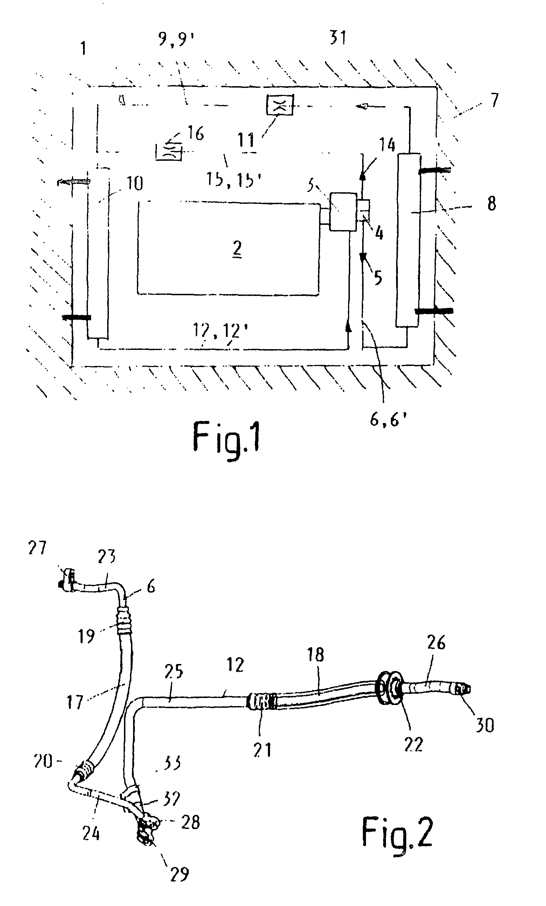

Die in Fig. 1 dargestellte, sowohl zum Kühlen als auch zum Heizen geeignete Klimaanlage 1 hat auf übliche Weise einen am Triebwerk 2 des Kraftfahrzeuges befestigten Kompressor 3. Dieser fördert im Kühlbetrieb das vorzugsweise aus Kohlendioxid (CO₂) bestehende Betriebsmittel über ein Umschaltventil 4 in Richtung des Pfeiles 5 durch einen ersten, druckseitigen Rohrstrang 6 zu einem ersten, frontseitig an der Fahrzeugkarosserie 7 befestigten Wärmetauscher 8. Dieser ist über einen zweiten Rohrstrang 9 mit einem an der Fahrzeugkarosserie 7 befestigten und im z.B. im Klimakasten des Fahrzeuges angeordneten zweiten Wärmetauscher 10 verbunden. In diesem zweiten Rohrstrang 9 erfolgt funktionsgemäß die Expansion des Betriebsmittels, wofür entsprechend bisheriger Technik ein Expansionsventil 11 vorgesehen ist. Ein dritter Rohrstrang 12 führt das Betriebsmittel saugseitig zurück zum Kompressor 3.

Im Heizbetrieb, d.h. nach Umschalten des Ventils 4, fördert der Kompressor 3 das Betriebsmittel in Richtung des Pfeiles 14 über einen vierten Rohrstrang 15 direkt zu einem an der Karosserie 7 befestigten Wärmetauscher 10, der mit dem zuvor genannten Wärmetauscher 10 identisch sein kann. Auch in diesem vierten Rohrstrang 15 erfolgt funktionsgemäß eine Expansion des Betriebsmittels, so dass sich im Druck-Enthalpiediagramm entsprechend einem sogenannten Dreiecksprozess ein dreieckförmiges Betriebsdiagramm ergibt. Entsprechend bisheriger Technik wird hierzu ein weiteres Expansionsventil 16 verwendet.

Um zu verhindern, dass sich die Vibrationen des Hubkolbentriebwerkes 2 sowie des, z.B. nach dem Taumelscheibenprinzip arbeitenden Hubkolbenkompressors 3 und die Druckpulsationen des Betriebsmittels der Klimaanlage über den ersten, dritten und vierten Rohrstrang 6, 12 und 15 auf die Wärmetauscher 8 und 10 und damit auf die Fahrzeugkarosserie 7 und folglich bis zum Fahrgastraum des Kraftfahrzeuges fortpflanzen, ist entsprechend der Darstellung in Fig.2 in den Rohrsträngen 6,12,15 bekannter Klimaanlagen 1 jeweils ein faserarmierter Gummischlauch 17 und 18 eingesetzt und über aufgepresste Rohrmanschetten 19 bis 22 mit den sonst metallischen Strangbereichen 23 bis 26 dichtend verbunden. An ihren Enden sind diese Rohrstränge 6,12 jeweils über Rohrkupplungselemente 27 bis 30 einerseits am Kompressor 3 und andererseits an einem der Wärmetauscher 8,10 lösbar angeschlossen.

Da eine der kompressorseitigen Anschlusskupplungen (29) nach Einbau des Triebwerkes 2 im Triebwerksraum 31 nicht mehr zugänglich ist, führt ein kurzes Rohrstück 32 zu einer montagegerechten Position, an der eine weitere, lösbare Rohrkupplung 33 vorgesehen ist. Der druckseitige Rohrabschnitt 6 hingegen lässt sich zur Montage oder Demontage des Triebwerkes 2 aufgrund der Flexibilität des Gummischlauchs 17 seitlich in eine Freigabeposition wegbiegen.

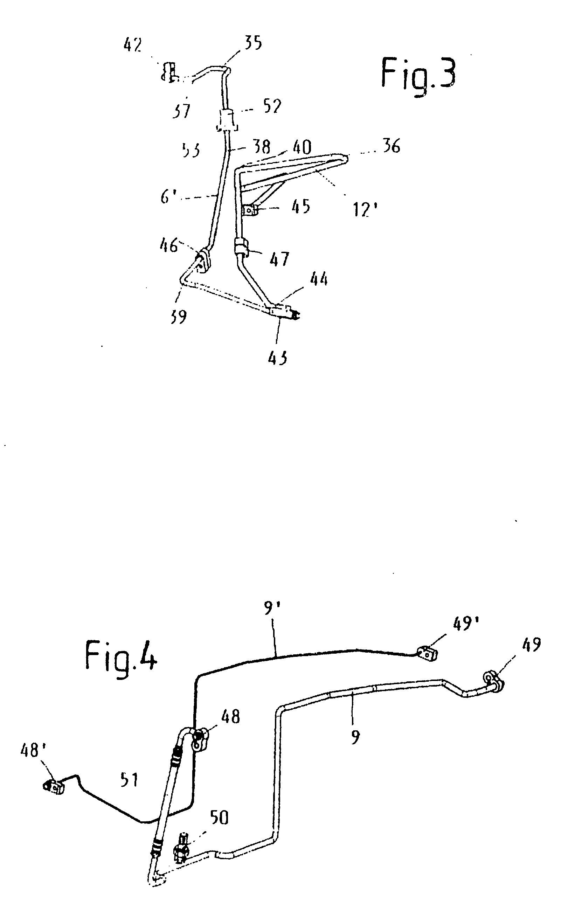

Die Fig.3 zeigt zwischen dem Kompressor 3 und einem Wärmetauscher 8,10 verlaufende Rohrstränge 6',12', vorzugsweise eines CO₂-Kanalsystems, in erfindungsgemäßer Ausführung und entsprechend ganzheitlich aus Metall, z.B. aus einer Aluminiumlegierung. Ihr verhältnismäßig geringer Außendurchmesser von saugseitig (12) weniger als 13 mm und von druckseitig (6') weniger als 11 mm führt trotz einer hohen Prüfdruckfestigkeit von z. B. 500 bar, verbunden mit mindestens einer Rohrkrümmung 35,36 zu einer ausreichenden Nachgiebigkeit im Rohrstrang 6',12, um die Übertragung von Vibrationen vom Triebwerk 2 auf die Fahrzeugkarosserie 7 zu verhindern. Vorzugsweise sind diese Rohrkrümmungen 35,36 als Dämpfungskrümmungen zusätzlich zu mindestens einer durch die Einbaugeometrie des Kanalsystems bedingten Rohrkrümmung 37 bis 40 vorgesehen.

Zur Erleichterung von Arbeiten im Triebwerksraum 31, einschließlich Montage und Demontage des Triebwerkes 2, ist in jedem der Rohrstränge 6'und 12'in größerem Abstand von endseitigen Rohrkupplungselementen 42 bis 45 eine zusätzliche, leicht lösbare Rohrkupplung 46 und 47 vorgesehen, die ebenfalls einschließlich ihres nicht dargestellten Dichtringes ganzheitlich metallisch und damit diffusionsdicht ausgeführt sind.

Die Darstellung der Fig.4 zeigt nebeneinander zum einen eine erfindungsgemäße Ausführung des zweiten Rohrstranges 9 ' und zum anderen seine Ausführung (9) entsprechend dem Stand der Technik. Da in diesem, jeweils über endseitige Kupplungselemente 48',49'bzw. 48,49 mit einem der Wärmetauscher 8,10 verbundenen zweiten Rohrstrang 9 die Expansion des Betriebsmittels der Klimaanlage 1 zu erfolgen hat, ist entsprechend dem Stand der Technik in diesem ein Expansionsventil 50 vorgesehen. Außerdem ist auch in diesem zweiten Rohrstrang 9 ein Gummischlauch 51 montiert, der durch seine Biegsamkeit seine Verlegung im Triebwerksraum 31 erleichtern soll und ebenfalls zur Dämpfung von Vibrationen beitragen soll.

Aufgrund einer bevorzugten Ausführungsform der Erfindung ist dieser zweite Rohrstrang 9', in dem funktionsgemäß eine Drosselung der Strömung des Betriebsmittels der Klimaanlage vorzusehen ist, als dünner Rohrstrang 9'mit einem zur Drosselung der Betriebsmittelströmung geeigneten, kapillarrohrartig kleinen Innendurchmesser ausgeführt, so dass ein Expansionsventil 50 überflüssig wird. Der Außendurchmesser dieses der Drosselung dienenden Rohrstranges 9' kann somit erheblich kleiner sein als derjenige des ersten und zweiten Rohrstranges 6 und 12 bzw. 6 und'12 und beispielsweise im Bereich von 2 bis 4 mm liegen. Folglich ist dieser Rohrstrang 9' besonders flexibel und im Triebwerksraum 31 raumsparend und leicht zu montieren. Das Gleiche gilt auch für einen dem Heizbetrieb einer CO₂- Klimaanlage 1 dienenden Rohrstrang 15, indem das dort übliche Expansionsventil 16 auf erfindungsgemäße Weise durch einen ganzmetallischen dünnen Rohrstrang (15') mit kapillarrohrartig kleinem Innendurchmesser ersetzt werden kann.

Zur Vermeidung der Übertragung von Vibrationen aufgrund von Druckpulsationen im Betriebsmittelstrom der Klimaanlage 1 kann weiterhin in die druckseitigen, ganzmetallischen Rohrstränge 6',15' oder in eine eventuell vorhandene Rohrleitung zwischen dem Kompressor 3 und dem Umschaltventil 4 ein Zusatzvolumen vorgesehen sein. Ein solches Zusatzvolumen kann durch einen vergrößerten Rohrdurchmesser über eine bestimmte Teillänge realisiert werden oder durch ein separates, in den Rohrstrang bzw. die Rohrleitung eingefügtes Bauteil einen sogenannten Muffler 52. Ein solches Zusatzvolumen kann aber auch in den Kompressor 3 integriert sein.

Um zu verhindern, dass ein als Expansionsventil (11,16) wirkendes dünnes Rohr 9'und 15' mit kapillarrohrartig kleinem Innendurchmesser durch Verunreinigungen im Betriebsmittelstrom verstopft, ist vorzugsweise im betreffenden Kanalsystem ein Filter 53 vorgesehen, der beispielsweise mit dem Muffler 52 eine bauliche Einheit bildet. Außerdem kann der Filter 53 auf nicht dargestellte Weise mit einem Homogenisator kombiniert sein, so dass nachteilig große Gasblasen im Betriebsmittelstrom homogen aufgeteilt werden.

## Patentansprüche

1. Kraftfahrzeug mit einer Klimaanlage (1), deren Kanalsystem (6,12,15) einen am Triebwerk (2) des Fahrzeuges befestigten Kompressor (3) mit mindestens einem an der Fahrzeugkarosserie (7) befestigten Wärmetauscher (8,10) verbindet, wobei das im Triebwerksraum (31) des Fahrzeuges verlaufende Kanalsystem (6,9,12,15) mindestens eine durch die Einbaugeometrie im Fahrzeugraum bedingte Rohrkrümmung (37-40) aufweist, zumindest ein Teil der Rohrstränge (6,9,12,15) des Kanalsystems aus metallischem Werkstoff besteht und zur Vermeidung der Übertragung von Schwingungen vom Kompressor (3) auf die Fahrzeugkarosserie (7) Mittel zur Schwingungsdämpfung vorgesehen sind, **dadurch gekennzeichnet, dass** zumindest ein Rohrstrang (6',12',15'), der einerseits an dem Kompressor (3) und anderseits an einem an der Fahrzeugkarosserie (7) befestigten Wärmetauscher (8,10) angeschlossen ist, einschließlich seiner Rohrkupplungen (42-45) ganzheitlich aus metallischem Werkstoff besteht und einen Außendurchmesser von weniger als 13 mm aufweist.

2. Kraftfahrzeug nach Anspruch 1, **dadurch gekennzeichnet, dass** in dem mindestens einen, ganzheitlich aus Metall bestehenden Rohrstrang (6',12',15') zusätzlich zu mindestens einer durch seine Einbaugeometrie im Triebwerksraum bedingten Rohrkrümmung (37-40) mindestens eine Dämpfungskrümmung (35,36) vorgesehen ist.

3. Kraftfahrzeug nach Anspruch 1 oder 2, **dadurch gekennzeichnet, dass** ein Rohrstrang (9'15'), in dem funktionsgemäß eine Drosselung der Strömung des Betriebsmittels der Klimaanlage (1) vorzusehen ist, als dünner Rohrstrang (9',15') mit einem zur Drosselung der Strömung bestimmten, kapillarrohrartig kleinen Innendurchmesser ausgeführt ist.

4. Kraftfahrzeug nach einem der Ansprüche 1 bis 3, **dadurch gekennzeichnet dass** das Betriebsmittel der Klimaanlage CO₂ ist und der Außendurchmesser seiner Rohrstränge, bezogen auf den Kompressor (3), druckseitig kleiner als 11 mm und saugseitig kleiner als 13 mm ist.

5. Kraftfahrzeug nach Anspruch 4, **dadurch gekennzeichnet, dass** ein Bereich des CO₂₋Kanalsystems der Klimaanlage (1), in dem funktionsgemäß eine Drosselung der Strömung ihres CO₂-Betriebsmittels vorzusehen ist, als dünner Rohrstrang (9',15') mit einem kapillarrohrartigen Innendurchmesser von weniger als 2mm und einem Außendurchmesser im Bereich von 2 bis 4 mm ausgeführt ist.

6. Kraftfahrzeug nach Anspruch 5, **dadurch gekennzeichnet, dass** in Strömungsrichtung vor dem Rohrstrang (9',15') mit kapillarrohrartigem Innendurchmesser im Kanalsystem ein Filter (53) eingesetzt ist

7. Kraftfahrzeug nach einem der Ansprüche 1 bis 6, **dadurch gekennzeichnet, dass** mindestens ein ganzmetallischer Rohrstrang (6',12') des Kanalsystems in Abstand von seinen Anschlusskupplungen (42-45)) am Kompressor (3) und am Wärmetauscher (8,10) eine zusätzliche Rohrkupplung (46,47) aufweist.

8. Kraftfahrzeug nach einem der Ansprüche 1 bis 7, **dadurch gekennzeichnet, dass** in einem druckseitig vom Kompressor (3) zu einem Wärmetauscher (8) führenden Rohrstrang (6') des Kanalsystems der Klimaanlage (1) eine zur Dämpfung von Druckimpulsen in der Betriebsmittelströmung bestimmte Querschnittserweiterung (52) vorgesehen ist.

9. Kraftfahrzeug nach Anspruch 8, **dadurch gekennzeichnet, dass** die zur Dämpfung von Druckimpulsen bestimmte Querschnittserweiterung des Kanalsystems in einem Rohrstrang als mufflerartige Rohrerweiterung (52) vorgesehen ist.

10. Kraftfahrzeug nach einem der Ansprüche 1 bis 9, **dadurch gekennzeichnet, dass** die Rohrstränge (6,12,15) des Kanalsystems der Klimaanlage (1) einschließlich ihrer Rohrkupplungen (42-49) und deren Dichtelemente aus diffusionsdichtem Metall ausgeführt sind.

## Claims

1. Vehicle with an air-conditioning unit (1), the conduit system (6, 12, 15) of which connects a compressor (3), attached onto the engine (2), to at least one heat exchanger (8, 10) attached to the automobile body (7), whereby the conduit system running in the engine space (31) of the vehicle has at least one pipe curve (37-40) caused by the geometry of installation, and whereby at least one part of the pipe stretches (6, 9, 12, 15) of the conduit system is made of metallic material and means of damping vibrations are provided in order to avoid the transmission of vibrations from the compressor (3) to the automobile body (7), **characterized in that** at least one pipe stretch (6', 12', 15'), which is connected on one side to the compressor (3) and, on the other side, is attached to a heat exchanger (8, 10) attached to the automobile body, also including its pipe connections (42-45), is made of metallic material and has an outer diameter of less than 13 mm.

2. Vehicle in accordance with claim 1, **characterized in that**, in the at least one fully metal pipe stretch (6', 12', 15'), there is, in addition to at least one pipe bend (37-40) caused by the shape of the engine space into which it is installed, at least one damping bend (35, 36).

3. Vehicle in accordance with claims 1 or 2, **characterized in that** a pipe stretch (9', 15'), in which throttling of the flow of the means of operating the air-conditioning unit (1) is to be provided in accordance with the function of the said pipe stretch (9', 15'), is implemented in the form of a thin pipe stretch (9', 15') with a small inner diameter, like that of a capillary tube, for throttling the flow.

4. Vehicle in accordance with claims 1 to 3, **characterized in that** the means of operating the air-conditioning unit is CO₂ and the outer diameter of its pipe stretches, in relation to the compressor (3), is less than 11 mm on the pressure side and is less than 13 mm on the suction side.

5. Vehicle in accordance with claim 4, **characterized in that** an area of the CO₂ conduit system of the air-conditioning unit (1), in which throttling of the flow of its CO₂ operating means is to be provided in accordance with functioning, is implemented as a thin pipe stretch (9', 15') with an inner diameter, like that of a capillary tube, of less than 2 mm and an outer diameter of in the region of 2 to 4 mm.

6. Vehicle in accordance with claim 5, **characterized in that** a filter (53) is inserted into the conduit system, before, in the direction of flow, the pipe stretch (9', 15') with the capillary-type internal diameter.

7. Vehicle in accordance with one of claims 1 to 6, **characterized in that** at least one fully metal pipe stretch (6', 12') of the conduit system has an additional pipe connection means (46, 47) at a separation from the connections (42-45) to the compressor and to the heat exchanger (8, 10).

8. Vehicle in accordance with one of claims 1 to 7, **characterized in that** there is an extension of cross-sectional area (52), determined such that is damps pressure pulses in the flow of the operating means, in one pipe stretch (6'), of the conduit system of the air-conditioning unit (1), leading, on the pressure side, from the compressor (3) to a heat exchanger (8).

9. Vehicle in accordance with claim 8, **characterized in that** the extension of cross-sectional area, of the conduit system, determined in accordance with the damping of pressure pulses, is provided, in a pipe stretch, as a muffler-type pipe widening (52).

10. Vehicle in accordance with one of claims 1 to 9, **characterized in that** the pipe-stretches (6, 12, 15) of the conduit system of the air-conditioning unit (1), including its pipe connections (42-49) and their sealing elements, are made of metal that resists diffusion.

## Revendications

1. Véhicule automobile équipé d'une climatisation (1), dont le système de canaux (6, 12, 15) relie un compresseur (3) fixé au moteur (2) du véhicule avec au moins un échangeur de chaleur (8, 10) fixé sur la carrosserie (7) du véhicule, dans lequel le système de canaux (6, 9, 12, 15) qui s'étend dans le compartiment du moteur (31) du véhicule présente au moins une courbure de tuyauterie (37-40) conditionnée par la géométrie de montage dans le compartiment du véhicule, dans lequel au moins une partie des trajets de tuyauteries (6, 9, 12, 15) du système de canaux se compose de matériau métallique et dans lequel des moyens d'amortissement des vibrations sont prévus pour éviter la transmission de vibrations du compresseur (3) à la carrosserie (7) du véhicule, **caractérisé en ce qu'**au moins un tubage (6', 12', 15'), lequel est raccordé d'une part au compresseur (3) et d'autre part à un échangeur de chaleur (8, 10) fixé sur la carrosserie (7) du véhicule, est constitué dans son intégralité, y compris ses raccords de tuyauterie (42-45), de matériau métallique et présente un diamètre extérieur inférieur à 13 mm.

2. Véhicule automobile selon la revendication 1, **caractérisé en ce que** dans l'au moins un tubage(6', 12', 15') se composant dans son intégralité de métal est prévu, en plus d'au moins une courbure de tuyauterie (37-40) conditionnée par sa géométrie de montage dans le compartiment du moteur, au moins une courbure d'amortissement (35, 36).

3. Véhicule automobile selon la revendication 1 ou 2, **caractérisé en ce qu'**un tubage (9', 15'), dans lequel, selon le principe de fonctionnement on prévoit un étranglement de l'écoulement du fluide de service de la climatisation (1), est réalisé sous forme de tubage mince (9', 15') avec un faible diamètre intérieur à la manière d'un tube capillaire qui est destiné à assurer un étranglement, de l'écoulement.

4. Véhicule automobile selon l'une quelconque des revendications 1 à 3, **caractérisé en ce que** le fluide de service de la climatisation est du CO₂ et **en ce que** le diamètre extérieur de ses tubages en rapport avec le compresseur (3) est inférieur à 11 mm du côté refoulement et inférieur à 13 mm du côté aspiration.

5. Véhicule automobile selon la revendication 4, **caractérisé en ce qu'**une zone du système de canaux de CO₂ de la climatisation (1), dans laquelle, selon le principe de fonctionnement on prévoit un étranglement de l'écoulement de son fluide de service qui est du CO₂, est réalisée sous forme de tubage mince (9', 15') avec un diamètre intérieur à la manière d'un tube capillaire de moins de 2 mm et avec un diamètre extérieur situé dans la plage de 2 à 4 mm.

6. Véhicule automobile selon la revendication 5, **caractérisé en ce qu'**en direction de l'écoulement, un filtre (53) est placé dans le système de canaux devant le tubage (9', 15') avec un diamètre intérieur à la manière d'un tube capillaire.

7. Véhicule automobile selon l'une quelconque des revendications 1 à 6, **caractérisé en ce qu'**au moins un tubage (6', 12') entièrement en métal du système de canaux comprend un raccord de tuyauterie supplémentaire (46, 47) disposé avec un espacement par rapport à ses raccords de branchement (42-45) sur le compresseur (3) et sur l'échangeur de chaleur (8, 10).

8. Véhicule automobile selon l'une quelconque des revendications 1 à 7, **caractérisé en ce que**, dans un tubage (6') du système de canaux de la climatisation (1) conduisant du côté refoulement du compresseur (3) jusqu'à un échangeur de chaleur (8) est prévu un élargissement de la section (52) qui est destiné à amortir des impulsions de pression de l'écoulement du fluide de service.

9. Véhicule automobile selon la revendication 8, **caractérisé en ce que** l'élargissement de la section du système de canaux destiné à amortir des impulsions de pression est prévu dans un tubage sous forme d'élargissement de tube (52) à la manière d'un manchon.

10. Véhicule automobile selon l'une quelconque des revendications 1 à 9, **caractérisé en ce que** les tubages (6, 12, 15) du système de canaux de la climatisation (1), y compris leurs raccords de tuyauterie (42-49) et les éléments d'étanchéité de ceux-ci, sont réalisés en métal étanche à la diffusion.
